# EUROPÄISCHE PATENTSCHRIFT

(11) **EP 2 879 116 B1**
(45) Veröffentlichungstag und Bekanntmachung des Hinweises auf die Patenterteilung: **25.07.2018**
(21) Anmeldenummer: 14186581.6
(22) Anmeldetag: 26.09.2014
(51) Int. Cl.: G08G 1/16

(54) **Verfahren und Vorrichtung zur Erkennung der Durchfahrtsmöglichkeit eines Fahrzeugs**
Method and device for detecting whether a vehicle can drive through
Procédé et dispositif de reconnaissance de la possibilité de passage d'un véhicule

(30) Priorität: 11.11.2013 DE 102013222846
(43) Veröffentlichungstag der Anmeldung: 03.06.2015
(73) Patentinhaber: ROBERT BOSCH GMBH, 70442 Stuttgart (DE)
(72) Erfinder: Walenta, Sebastian, 70499 Stuttgart (DE)

(56) Entgegenhaltungen:
- EP-A1- 2 063 406
- DE-A1-102004 015 749
- DE-A1-102009 040 170
- DE-A1-102011 113 077

## Beschreibung

### Stand der Technik

Die Erfindung betrifft ein Verfahren zur Erkennung der Durchfahrtsmöglichkeit eines Fahrzeugs nach dem Oberbegriff des Anspruchs 1. Ferner betrifft die Erfindung eine Vorrichtung zum Durchführen des erfindungsgemäßen Verfahrens.

Ein Verfahren nach dem Oberbegriff des Anspruchs 1 ist aus der DE 10 2004 015 749 A1 der Anmelderin bekannt. Bei dem bekannten Verfahren weist ein Fahrzeug zwei Sensoreinrichtungen auf, wobei eine erste Sensoreinrichtung ein oberhalb der Fahrbahn in die Fahrbahn hineinragendes Hindernis, wie es eine Tunneleinfahrt oder eine Parkhauseinfahrt darstellt, erkennt. Darüber hinaus weist das Fahrzeug eine zweite Sensoreinrichtung zur Erfassung des in Fahrtrichtung des Fahrzeugs vorausliegenden Fahrbahnbereichs auf. Wesentlich dabei ist, dass die angesprochene zweite Sensoreinrichtung dazu dient, um gegebenenfalls eine Höhendifferenz zwischen einer ansteigenden Fahrbahn und der Position des in die Fahrbahn hineinragenden Hindernisses zu bestimmen. Dadurch sollen Höhendifferenzen zwischen der augenblicklichen Fahrzeugposition in Bezug auf die Fahrbahnhöhe im Bereich des Hindernisses egalisiert werden. Das Umwelterkennungssystem ist darüber hinaus mit einer Datenverarbeitungseinrichtung ausgestattet, die aufgrund der maximalen Fahrzeughöhe bei einer unzureichenden Durchfahrtshöhe eine Warnmeldung erzeugt. Das aus der DE 10 2004 015 749 A1 bekannte Verfahren arbeitet immer dann hinreichend genau bzw. zuverlässig, wenn im Bereich der Einfahrt bzw. Durchfahrt der Fahrbahnverlauf im Wesentlichen eben ausgebildet ist. Dies rührt daher, dass bei einem derartigen Fahrbahnprofil die tatsächlich benötigte Durchfahrtshöhe maximal der Fahrzeughöhe entspricht. Ist hingegen der Fahrbahnverlauf im Bereich knapp vor und/oder hinter der Durchfahrt beispielsweise konkav ausgebildet, so ergibt sich aufgrund der Tatsache, dass die maximale Fahrzeughöhe üblicherweise zwischen den beiden Achsen des Fahrzeugs angeordnet ist, eine erhöhte benötigte Durchfahrtshöhe, die mit dem bekannten Verfahren nicht ermittelt werden kann.

Aus der EP 1 470 958 B1 ist darüber hinaus die Darstellung der Umgebung eines Fahrzeugs mittels einer Bildausgabeeinheit bekannt, die mittels kamerabasierter Umwelterkennungssysteme arbeitet, wobei auf Basis der Abmessungen des Fahrzeugs der für eine ungehinderte Fahrt benötigte Freiraum berechnet wird und dieser in das Bild der Fahrzeugumgebung (in Fahrtrichtung des Fahrzeugs) eingeblendet wird. Die Berechnung einer tatsächlich benötigten Durchfahrtshöhe infolge der geometrischen Abmessungen des Fahrzeugs bei einem gekrümmten bzw. unebenen Fahrbahnverlauf im Bereich der Durchfahrt ist jedoch nicht offenbart.

Die DE 10 2011 113 077 A1 beschreibt ein Verfahren zur Bestimmung einer Durchfahrbarkeit eines Objekts für ein Fahrzeug. Dabei wird mittels einer 3D-Kamera ein Bild von der Fahrzeugumgebung bestimmt und eine Trajektorie ermittelt, auf der sich das Fahrzeug wahrscheinlich bewegen wird. Aus den Daten der 3D-Kamera ermittelt, ob es Durchfahrtsmöglichkeiten für das Fahrzeug unter dem Objekt gibt, indem eine Eintrittsfläche bestimmt wird und mit den Abmessungen des Fahrzeugs verglichen wird. So kann ein Durchfahrtskorridor bestimmt werden, entlang dem das Fahrzeug nicht mit dem Objekt kollidieren wird.

Die DE 10 2004 015 749 A1 beschreibt eine Vorrichtung zur Bestimmung einer Durchfahrtsmöglichkeit für ein Fahrzeug an Hindernissen. Es wird abgeschätzt, ob das Fahrzeug bezüglich seiner Fahrzeughöhe und/oder seiner Breite ein oder mehrere Hindernisse kollisionsfrei passieren kann. Dazu wird die Durchfahrtshöhe durch entsprechend ausgerichtete Sensoren am Fahrzeug gemessen und mit der Fahrzeughöhe verglichen

Die DE 10 2009 040 170 A1 beschreibt ein Sensor-Fahrwerksystem, das einen Bereich über und/oder hinter und/oder über einem Fahrzeug erfasst wird. Falls eine maximale Durchfahrtshöhe unter einem Hindernis überschritten ist, wird das Fahrzeugchassis entsprechend abgesenkt, um eine Durchfahrt zu ermöglichen Offenbarung der Erfindung

Ausgehend von dem dargestellten Stand der Technik liegt der Erfindung die Aufgabe zugrunde, ein Verfahren zur Erkennung der Durchfahrtsmöglichkeit eines Fahrzeugs nach dem Oberbegriff des Anspruchs 1 derart weiterzubilden, dass bei einem gekrümmt bzw. uneben ausgebildeten Fahrbahnverlauf im Bereich der Durchfahrt eine ggf. vorhandene Kollisionsgefahr trotz des Umstands, dass die Durchfahrtshöhe in der Ebene der Durchfahrt selbst größer ist als die maximale Fahrzeughöhe, sicher erkannt und ein entsprechender Warnhinweis erzeugt wird.

Diese Aufgabe wird bei einem Verfahren zur Erkennung der Durchfahrtsmöglichkeit eines Fahrzeugs mit den Merkmalen des Anspruchs 1 dadurch gelöst, dass die Datenverarbeitungseinrichtung die Durchfahrtshöhe im Bereich der Durchfahrt mit Daten des Fahrbahnverlaufs in einem Abstandsbereich vor und hinter der Ebene der Durchfahrt verknüpft und daraus eine effektive Durchfahrtshöhe in einem Fahrkorridor in Fahrtrichtung des Fahrzeugs ermittelt, die für das Fahrzeug zur Verfügung steht.

Mit anderen Worten gesagt bedeutet dies, dass die Datenverarbeitungseinrichtung erkennt, ob im relevanten Bereich vor oder hinter der Ebene der Durchfahrt ein gekrümmt ausgebildeter oder ungleichförmiger Fahrbahnverlauf vorhanden ist, der zu einer Erhöhung der benötigten Durchfahrtshöhe in der Ebene der Durchfahrt führt. Unter einem Abstandsbereich vor und hinter der Ebene der Durchfahrt wird dabei beispielsweise ein Bereich vor und hinter der Ebene der Durchfahrt verstanden, der jeweils der Fahrzeuglänge entspricht und somit für die Bewertung der Durchfahrtsmöglichkeit herangezogen wird.

Vorteilhafte Weiterbildungen des erfindungsgemäßen Verfahrens zur Erkennung der Durchfahrtsmöglichkeit eines Fahrzeugs sind in den Unteransprüchen aufgeführt.

Erfindungsgemäß ist vorgesehen, dass die Datenverarbeitungseinrichtung die effektive Durchfahrtshöhe auf Grundlage eines Achsabstands des Fahrzeugs und dem Ort der maximalen Fahrzeughöhe
in Bezug auf das Fahrzeug ermittelt und die effektive Durchfahrtshöhe mit der erfassten Durchfahrtshöhe in der Durchfahrt vergleicht. Ein derartiges Verfahren hat den Vorteil, dass es anhand der tatsächlichen geometrischen Abmessungen des Fahrzeugs eine effektive Durchfahrtshöhe ermitteln kann und somit erst dann einen Warnhinweis ausgibt, wenn die effektive Durchfahrtshöhe geringer ist als die tatsächlich erfasste Durchfahrtshöhe in der Durchfahrt.

Alternativ ist es jedoch auch denkbar, dass der maximalen Fahrzeughöhe ein fester Sicherheitsabstand hinzuaddiert wird, der dem Vergleich mit der erfassten Durchfahrtshöhe zugrundegelegt wird. Gemeint ist hierbei, dass beispielsweise von einem theoretischen Fahrbahnverlauf ausgegangen wird, der in der Praxis nicht erreicht wird, beispielsweise aufgrund gesetzlicher Baubestimmungen. Dieser extreme Fahrbahnverlauf führt bei den bekannten geometrischen Abmessungen des Fahrzeugs zu einer bestimmten Erhöhung der benötigten Durchfahrtshöhe, die, als Festwert vorgegeben, der tatsächlichen Fahrzeughöhe als Festwert hinzuaddiert wird. Ein derartiges Verfahren hat den Vorteil, dass ggf. der Rechenaufwand in der Datenverarbeitungseinrichtung verringert werden kann.

Ganz besonders bevorzugt ist es, wenn das Umwelterkennungssystem die Daten (gemeint sind die Daten von Sensoreinrichtungen des
Umwelterkennungssystems) in regelmäßigen Zeitabständen, vorzugsweise geschwindigkeitsabhängig, erfasst. Eine geschwindigkeitsabhängige Erfassung hat dabei den Vorteil, dass die Rechnerkapazität bzw. Rechnerleistung optimal den Umständen angepasst werden kann, so dass nicht benötigte Rechnerleistung ggf. für andere Anwendungen verwendet werden kann, um diese schneller durchzuführen.

Um eine mögliche Kollision auch bei einer ggf. verspäteten oder nicht vorhandenen Reaktion eines Fahrers bei einem Warnhinweis sicher zu vermeiden, kann es vorgesehen sein, dass beim Erkennen einer Kollisionsgefahr neben einer akustischen und/oder optischen Warnung ein Fahrzeugeingriff erfolgt. Unter einem Fahrzeugeingriff im Sinne der Erfindung wird dabei insbesondere das Aktivieren der Bremseinrichtung des Fahrzeugs bzw. die Reduzierung der Motorleistung o.ä. verstanden.

Die Erfindung umfasst auch eine Vorrichtung zum Durchführen eines erfindungsgemäßen Verfahrens, wobei ein Umwelterkennungssystem zur Erfassung eines in Fahrtrichtung vorausliegenden Fahrbahnverlaufs sowie einer Durchfahrtshöhe einer Durchfahrt vorhanden ist, sowie eine Datenverarbeitungseinrichtung, die dazu ausgebildet ist, beim Erkennen einer unzureichenden Durchfahrtshöhe eine Warnmeldung zu erzeugen. Erfindungsgemäß weist die Datenverarbeitungseinrichtung einen Algorithmus auf, der die effektiv zur Verfügung stehende Durchfahrtshöhe anhand des Fahrbahnverlaufs in einem Abstandsbereich vor und nach der Durchfahrt ermittelt.

Das Umwelterkennungssystem zur Erkennung eines in die Fahrbahn hineinragenden Hindernisses, wie es eine Durchfahrt darstellt, sowie des Fahrbahnverlaufs kann auf unterschiedlichste Art und Weise ausgebildet sein. Vorzugsweise umfasst das Umwelterkennungssystem jedoch wenigstens eine Sensoreinrichtung, die auf Ultraschallbasis oder kamerabasiert arbeitet. Dabei soll auch die Möglichkeit umfasst sein, dass für den jeweils benötigten Zweck (Erkennung einer Durchfahrt und Erkennung des Fahrbahnverlaufs) jeweils unterschiedliche Systeme oder redundante Systeme vorgesehen sein können.

Bevorzugt ist jedoch, dass das Umwelterkennungssystem zur Erfassung des Fahrbahnverlaufs und zur Erfassung einer Durchfahrtshöhe jeweils wenigstens eine separate Sensoreinrichtung aufweist. Dadurch kann die jeweilige Sensoreinrichtung dem jeweiligen speziellen Anwendungsfall optimal angepasst werden.

In praktischer Umsetzung des zuletzt gemachten Vorschlags ist es vorgesehen, dass die wenigstens eine Sensoreinrichtung zur Erfassung des Fahrbahnverlaufs in einem Frontbereich, vorzugsweise im Bereich eines Stoßfängers des Fahrzeugs, und die wenigstens eine Sensoreinrichtung zur Erfassung der Durchfahrtshöhe in einem Spiegel des Fahrzeugs angeordnet ist. Eine derartige Anordnung hat den Vorteil, dass sie beispielsweise die im Bereich des Stoßfängers vorhandenen Ultraschallsensoren oder eine im Bereich eines Außenspiegels vorgesehene Kamera, die beispielsweise der Totwinkelerkennung oder ähnlichem dient, gleichzeitig zur erfindungsgemäßen Erfassung der benötigten Durchfahrtshöhe verwenden kann.

Darüber hinaus ist es von Vorteil, wenn das Umwelterkennungssystem dazu ausgebildet ist, den Fahrbahnverlauf sowie die Durchfahrtshöhe in beide Fahrzeugrichtungen zu erfassen. Dadurch ist es möglich, eine Kollisionsgefahr auch beim Rückwärtsfahren (beispielsweise in eine Garageneinfahrt oder Parkhauseinfahrt) zu erkennen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 und Fig. 2: in jeweils schematischer Darstellung unterschiedliche Durchfahrtssituationen eines Fahrzeugs vor- bzw. beim Passieren einer Durchfahrt,
- Fig. 3: ein Fahrzeug mit einem erfindungsgemäßen Umwelterkennungssystems zur Erkennung der Durchfahrtsmöglichkeit und
- Fig. 4: ein Blockschaubild zur Verdeutlichung des erfindungsgemäßen Verfahrens der Erkennung der Durchfahrtsmöglichkeit.

Gleiche Elemente bzw. Elemente mit gleicher Funktion sind in den Figuren mit den gleichen Bezugsziffern versehen.

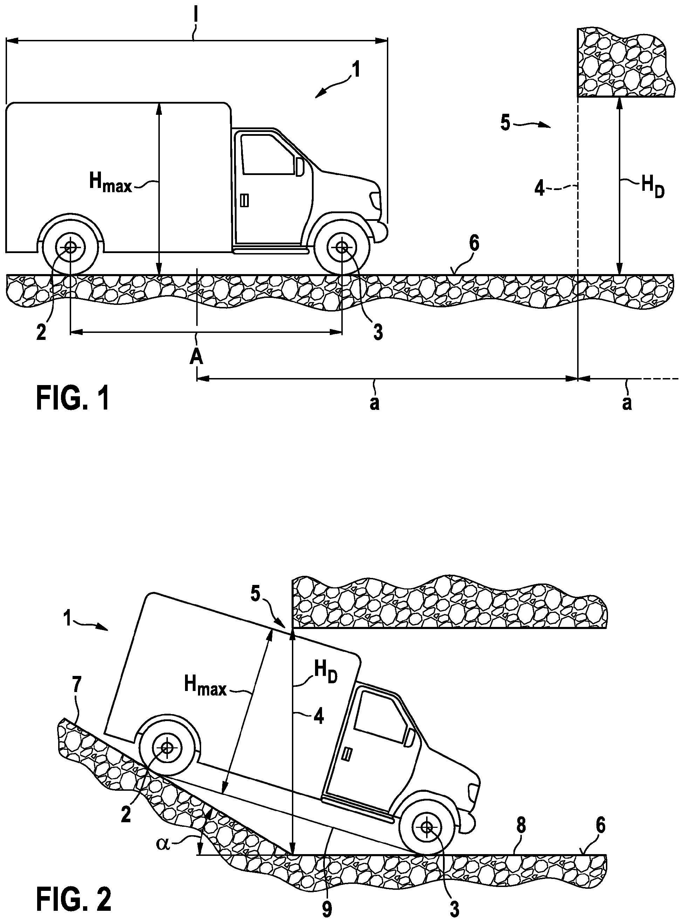

In den Fig. 1 und 2 sind typische Durchfahrtssituationen für ein Fahrzeug 1 beim Passieren einer Durchfahrt 5 dargestellt. Hierbei fährt das Fahrzeug 1 bei der Darstellung der Fig. 1 auf einer ebenen Fahrbahn 6, wobei die Ebenheit der Fahrbahn 6 zumindest in einem Bereich der Länge a gegeben ist, wobei die Länge a der Fahrzeuglänge I entspricht. Insbesondere ist jeweils in einem Abstandsbereich a vor und hinter der Ebene 4 der Durchfahrt 5 die Ebenheit der Fahrbahn 6 gewährleistet. Die Durchfahrt 5 weist eine Durchfahrtshöhe H_{D} auf, die in dem in der Fig. 1 dargestellten Ausführungsbeispiel konstant ist. Darüber hinaus weist das Fahrzeug 1 einen Achsabstand A sowie eine maximale Höhe Hₘₐₓ auf, die bei der Darstellung des Fahrzeugs 1 beispielsweise als Liefer- bzw. Kastenwagen in einem Bereich nach dem Führerhaus angenommen wird. Aus der Darstellung der Fig. 1 ergibt sich, dass das Fahrzeug 1 ohne Kollisionsgefahr die Durchfahrt 5 passieren kann, wenn die Durchfahrtshöhe H_{D} mindestens der Fahrzeughöhe Hₘₐₓ entspricht.

In der Fig. 2 ist der Fall dargestellt, bei der die Fahrbahn 6 einen ersten Fahrbahnabschnitt 7 und einen zweiten Fahrbahnabschnitt 8 aufweist, die jeweils für sich eben ausgebildet sind, jedoch unter einem Winkel α zueinander angeordnet sind. Der Übergangsbereich zwischen den beiden Fahrbahnabschnitten 7,8 fluchtet bei dem in der Fig. 2 dargestellten Ausführungsbeispiel mit der (Einfahrts-) Ebene 4 der Durchfahrt 5. Aus der Darstellung der Fig. 2 ist entnehmbar, dass das Fahrzeug 1 die Durchfahrt 5 nur dann passieren kann, wenn die Durchfahrtshöhe H_{D} deutlich größer ist als die maximale Fahrzeughöhe Hₘₐₓ. Dies ergibt sich dadurch, dass entsprechend der Darstellung der Fig. 2 die beiden Achsen 2, 3 des Fahrzeugs 1 auf unterschiedlichen Fahrbahnabschnitten 7, 8 angeordnet sind, so dass die Bezugsebene 9, von der die maximale Fahrzeughöhe Hₘₐₓ gemessen wird, sich oberhalb der beiden Fahrbahnabschnitte 7, 8 befindet und nicht entsprechend der Darstellung der Figur 1 identisch ist mit der Fahrbahn 6.

Aus der Darstellung der Fig. 2 folgt, dass immer dann, wenn sich die Durchfahrt 5 in einem Bereich einer Fahrbahn 6 befindet, bei der der Fahrbahnverlauf nicht eben ist, sondern insbesondere in einem Abstandsbereich einer Fahrzeuglänge I bezogen auf die Ebene 4 der Durchfahrt 5 vor und hinter der Durchfahrt 5 uneben ist, eine Kollisionsgefahr des Fahrzeugs 1 im Bereich der Durchfahrt 5 besteht, auch wenn die Höhe H_{D} in der Ebene 4 der Durchfahrt 5 größer ist als die maximale Fahrzeughöhe Hₘₐₓ.

Bei dem in der Fig. 2 dargestellten Ausführungsbeispiel wurde der unebene Fahrbahnverlauf durch zwei jeweils ebene Fahrbahnabschnitte 7, 8 erreicht, wobei auch ein stetig gekrümmter Fahrbahnverlauf oder ähnliches vorhanden sein könnte. Wesentlich für die oben erwähnten Zusammenhänge bezüglich der erforderlichen Durchfahrtshöhe in der Durchfahrt 5 mit Blick auf die maximale Fahrzeughöhe Hₘₐₓ ist die maximale Höhendifferenz der Achsen 2, 3 des Fahrzeugs 1 während des Passierens des Fahrzeugs 1 durch die Durchfahrt 5 in einem Abstandsbereich der Länge a vor und hinter der Ebene 4 der Durchfahrt 5.

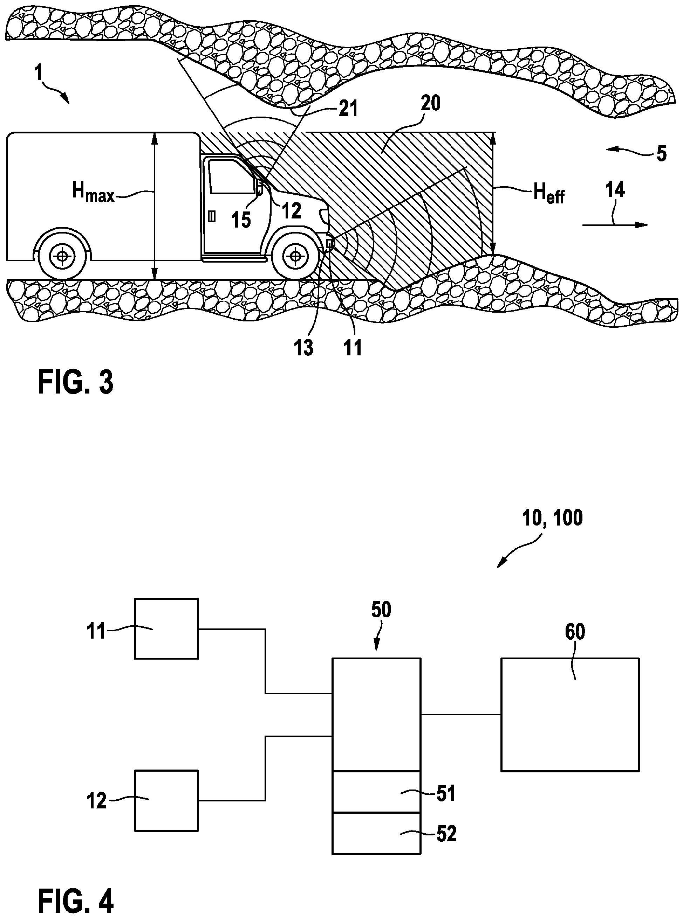

Erfindungsgemäß ist es vorgesehen, dass das Fahrzeug 1 gemäß der Fig. 3 und 4 eine Vorrichtung 100 mit einem Umwelterkennungssystem 10 umfasst, das zwei Sensoreinrichtungen 11, 12 aufweist: Die erste Sensoreinrichtung 11 befindet sich dabei beispielsweise im Stoßfängerbereich 13 des Fahrzeugs 1 und umfasst wenigstens einen, im Ausführungsbeispiel als Ultraschallsensor ausgebildeten Sensor, der den Fahrbahnbereich in Fahrtrichtung (Pfeil 14) vor dem Fahrzeug 1 erfasst. Die Erfassung (Reichweite, Auflösung) des Fahrbahnbereichs hängt dabei von den Eigenschaften der ersten Sensoreinrichtung 11 ab. Darüber hinaus ist die zweite Sensoreinrichtung 12 vorgesehen, die im Ausführungsbeispiel im Außenspiegel 15 des Fahrzeugs 1 integriert angeordnet ist. Die zweite Sensoreinrichtung 12 ist im dargestellten Ausführungsbeispiel ebenfalls als Ultraschallsensor ausgebildet, dessen Abstrahlkeule bzw. -richtung zumindest im Wesentlichen senkrecht nach oben gerichtet ist.

Ergänzend wird erwähnt, dass entweder eine, oder aber beide Sensoreinrichtungen 11,12 auch als kamerabasierte Sensoreinrichtung 11,12 ausgebildet sein kann. Darüber hinaus ist der Einbauort der jeweiligen Sensoreinrichtung 11,12 nicht auf den Stoßfängerbereich 13 bzw. den Außenspiegel 15 beschränkt. So ist es beispielsweise denkbar, insbesondere die zweite Sensoreinrichtung 12 im Bereich des Innenspiegels anzuordnen, wobei die zweite Sensoreinrichtung 12 dann durch die Fahrzeugscheibe hindurch den Bereich oberhalb des Fahrzeugs 1 erfasst.

Weiterhin weist das Fahrzeug 1 erfindungsgemäß entsprechend der Darstellung der Fig. 4 eine Datenverarbeitungseinrichtung 50 auf, die einen Algorithmus 51 sowie einen fahrzeugspezifischen Datensatz 52 enthält. Der fahrzeugspezifische Datensatz 52 umfasst die geometrischen Abmessungen des Fahrzeugs 1, hierbei den Achsabstand A zwischen den Achsen 2, 3 des Fahrzeugs 1 sowie die maximale Fahrzeughöhe Hₘₐₓ, sowie den Ort bzw. den Bereich, in dem sich die maximale Fahrzeughöhe Hₘₐₓ am Fahrzeug 1 befindet. Weiterhin sind die beiden Sensoreinrichtungen 11,12 der Umwelterkennungseinrichtung 10 derart mit der Datenverarbeitungseinrichtung 50 gekoppelt, dass deren Signale als Eingangssignale der Datenverarbeitungseinrichtung 50 zugeführt werden. Der Algorithmus 51 der Datenverarbeitungseinrichtung 50 verknüpft die Eingangswerte der Sensoreinrichtungen 11,12 zu einem virtuellen Fahrkorridor 20 (Fig. 3) in Fahrtrichtung des Fahrzeugs 1. Insbesondere wird dabei der Verlauf der Fahrbahn 6, d.h. die Ebenheit bzw. Neigung der Fahrbahn 6 erfasst. Mittels der zweiten Sensoreinrichtung 12 wird das Vorhandensein einer eventuellen Durchfahrt 5 bzw. eines in der Durchfahrt 5 befindlichen, die Durchfahrtshöhe einschränkenden Vorsprungs 21 erfasst. Der in der Datenverarbeitungseinrichtung 50 vorhandene Algorithmus 51 verknüpft nun die Daten des Datensatzes 52 des Fahrzeugs 1 mit den Daten der Umwelterkennungseinrichtung 10, um zu erkennen, ob beim Vorhandensein einer Durchfahrt 5 die von der zweiten Sensoreinrichtung 12 erfasste Durchfahrtshöhe H_{D} im Fahrkorridor 20 mit Blick auf beispielsweise die in der Fig. 3 dargestellte Fahrsituation ausreichend ist, damit das Fahrzeug 1 die Durchfahrt 5 kollisionsfrei passieren kann. Sollte dies nicht vorhanden sein, wie dies bei der Darstellung der Fig. 3 der Fall ist, da die effektive Durchfahrtshöhe H_{eff} im Fahrkorridor 20 aufgrund des Vorsprungs 21 geringer ist als die maximale Fahrzeughöhe Hₘₐₓ, wird von der Datenverarbeitungseinrichtung 50 ein Signal an eine Ausgabeeinheit 60 erzeugt, wobei die Ausgabeeinheit 60 entweder dazu ausgebildet ist, ein optisches und/oder akustisches Warnsignal für den Fahrer bezüglich einer drohenden Kollisionsgefahr mit der Durchfahrt 5 zu erzeugen, oder aber zusätzlich dazu, einen Fahreingriff, insbesondere einen Bremseingriff, durchzuführen.

Die soweit beschriebene Erfindung kann in vielfältiger Art und Weise abgewandelt bzw. modifiziert werden. Insbesondere kann es auch vorgesehen sein, dass das Fahrzeug 1 in seinem Heckbereich ebenfalls mit einem Umwelterkennungssystem 10 ausgestattet ist, um bei einer Rückwärtsfahrt des Fahrzeugs 1 im Heckbereich des Fahrzeugs 1 befindliche Hindernisse bzw. Durchfahrten 5 zu erkennen, um in analoger Art und Weise einen entsprechenden Warnhinweis an den Fahrer bzw. einen Fahreingriff bewirken zu können.

## Patentansprüche

1. Verfahren zur Erkennung der Durchfahrtsmöglichkeit eines Fahrzeugs (1), bei dem mittels eines Umwelterkennungssystems (10) der in Fahrtrichtung des Fahrzeugs (1) vorausliegende Fahrbahnbereich sowie die Durchfahrtshöhe (H_{D}) einer in Fahrtrichtung vorausliegenden Durchfahrt (5) erfasst und einer Datenverarbeitungseinrichtung (50) zugeführt werden, wobei die Datenverarbeitungseinrichtung (50) aufgrund der maximalen Fahrzeughöhe (Hₘₐₓ) bei einer unzureichenden Durchfahrtshöhe (H_{D}) eine Warnmeldung erzeugt,
wobei die Datenverarbeitungseinrichtung (50) die Durchfahrtshöhe (H_{D}) im Bereich der Durchfahrt (5) mit Daten des Fahrbahnverlaufs in einem Abstandsbereich (a) vor und hinter der Ebene (4) der Durchfahrt (5) verknüpft und daraus eine effektive Durchfahrtshöhe (H_{eff}) in einem Fahrkorridor (20) in Fahrtrichtung des Fahrzeugs (1) ermittelt, die für das Fahrzeug (1) zur Verfügung steht.
**dadurch gekennzeichnet,**
**dass** die Datenverarbeitungseinrichtung (50) feinen fahrzeugspezifischen Datensatz (52), welcher die geometrischen Abmessungen des Fahrzeugs (1), umfassend einen Achsabstand (A) zwischen den Achsen (2, 3) des Fahrzeugs (1) sowie die maximale Fahrzeughöhe (Hₘₐₓ) sowie den Ort bzw. den Bereich, in dem sich die maximale Fahrzeughöhe (Hₘₐₓ) am Fahrzeug (1) befindet, umfasst, und die Datenverarbeitungseinrichtung (50) die effektive Durchfahrtshöhe (H_{eff}) auf Grundlage des Achsabstands (A) des Fahrzeugs (1) und dem Ort der maximalen Fahrzeughöhe (Hₘₐₓ) in Bezug auf das Fahrzeug (1) ermittelt und die effektive Durchfahrtshöhe (H_{eff}) mit der erfassten Durchfahrtshöhe (H_{D}) der Durchfahrt (5) vergleicht.

2. Verfahren nach Anspruch 1,
**dadurch gekennzeichnet,**
**dass** das Umwelterkennungssystem (10) die Daten für den Fahrbahnverlauf in regelmäßigen Zeitabständen, vorzugsweise geschwindigkeitsabhängig, erfasst.

3. Verfahren nach einem der Ansprüche 1 oder 2,
**dadurch gekennzeichnet,**
**dass** beim Erkennen einer Kollisionsgefahr neben einer akustischen und/oder optischen Warnung ein Fahrzeugeingriff erfolgt.

4. Vorrichtung (100) zum Durchführen eines Verfahrens nach einem der Ansprüche 1 bis 3, mit einem Umwelterkennungssystem (10) zur Erfassung eines in Fahrtrichtung vorausliegenden Fahrbahnverlaufs sowie einer Durchfahrtshöhe (H_{D}) einer Durchfahrt (5), und einer Datenverarbeitungseinrichtung (50), die dazu ausgebildet ist, beim Erkennen einer im Vergleich zur maximalen Fahrzeughöhe (Hₘₐₓ) unzureichenden Durchfahrtshöhe (H_{D}) eine Warnmeldung zu erzeugen,
**dadurch gekennzeichnet,**
**dass** die Datenverarbeitungseinrichtung (50) einen Algorithmus (51) umfasst, der eine effektiv zur Verfügung stehende Durchfahrtshöhe (H_{eff}) anhand des Fahrbahnverlaufs in einem Abstandsbereich (a) vor und nach der Durchfahrt (5) ermittelt.

5. Vorrichtung nach Anspruch 4,
**dadurch gekennzeichnet,**
**dass** das Umwelterkennungssystem (10) wenigstens eine Sensoreinrichtung (11, 12) aufweist, die auf Ultraschallbasis oder kamerabasiert arbeitet.

6. Vorrichtung nach Anspruch 5,
**dadurch gekennzeichnet,**
**dass** das Umwelterkennungssystem (10) zur Erfassung des Fahrbahnverlaufs und zur Erfassung einer Durchfahrtshöhe (H_{D}) jeweils wenigstens eine separate Sensoreinrichtung (11, 12) aufweist.

7. Vorrichtung nach Anspruch 6,
**dadurch gekennzeichnet,**
**dass** die wenigstens eine Sensoreinrichtung (11) zur Erfassung des Fahrbahnverlaufs in einem Frontbereich, vorzugsweise in einem Stoßfängerbereich (13) des Fahrzeugs (1), und die wenigstens eine Sensoreinrichtung (12) zur Erfassung der Durchfahrtshöhe (H_{D}) in einem Spiegelbereich (15) des Fahrzeugs (1) angeordnet ist.

8. Vorrichtung nach einem der Ansprüche 4 bis 7,
**dadurch gekennzeichnet,**
**dass** das Umwelterkennungssystem (10) dazu ausgebildet ist, den Fahrbahnverlauf sowie die Durchfahrtshöhe (H_{D}) in beide Fahrzeugrichtungen des Fahrzeugs (1) zu erfassen.

## Claims

1. Method for detecting whether a vehicle (1) can pass through, in which the upcoming road region in the direction of travel of the vehicle (1) and the clearance height (H_{D}) of an upcoming passageway (5) in the direction of travel are captured using an environmental recognition system (10) and are supplied to a data processing device (50), wherein, on the basis of the maximum vehicle height (Hmax), the data processing device (50) generates a warning message in the event of an inadequate clearance height (H_{D}),
wherein the data processing device (50) links the clearance height (H_{D}) in the region of the passageway (5) to data relating to the course of the road in a distance range (a) before and after the plane (4) of the passageway (5) and determines an effective clearance height (H_{eff}) therefrom in a driving corridor (20) in the direction of travel of the vehicle (1), which effective clearance height is available for the vehicle (1),
**characterized**
**in that** the data processing device (50) a vehicle-specific data record (52) comprising the geometric dimensions of the vehicle (1), comprising an axial spacing (A) between the axles (2, 3) of the vehicle (1) as well as the maximum vehicle height (Hₘₐₓ) and the location or the region in which the maximum vehicle height (Hₘₐₓ) is situated on the vehicle (1), and the data processing device (50) determines the effective clearance height (Heft) on the basis of the axial spacing (A) of the vehicle (1) and the location of the maximum vehicle height (Hₘₐₓ) with respect to the vehicle (1) and compares the effective clearance height (H_{eff}) with the captured clearance height (H_{D}) of the passageway (5) .

2. Method according to Claim 1,
**characterized**
**in that** the environmental recognition system (10) captures the data for the course of the road at regular intervals of time, preferably on the basis of the speed.

3. Method according to either of Claims 1 and 2,
**characterized**
**in that** vehicle intervention is carried out in addition to an acoustic and/or optical warning if a risk of a collision is detected.

4. Apparatus (100) for carrying out a method according to one of Claims 1 to 3, having an environmental recognition system (10) for capturing an upcoming course of the road in the direction of travel and a clearance height (H_{D}) of a passageway (5) and a data processing device (50) which is designed to generate a warning message if a clearance height (H_{D}) which is inadequate in comparison with the maximum vehicle height (Hₘₐₓ) is detected,
**characterized**
**in that** the data processing device (50) comprises an algorithm (51) which determines an effectively available clearance height (H_{eff}) on the basis of the course of the road in a distance range (a) before and after the passageway (5).

5. Apparatus according to Claim 4,
**characterized**
**in that** the environmental recognition system (10) has at least one sensor device (11, 12) which operates on the basis of ultrasound or in a camera-based manner.

6. Apparatus according to Claim 5,
**characterized**
**in that** the environmental recognition system (10) respectively has at least one separate sensor device (11, 12) for capturing the course of the road and for capturing a clearance height (H_{D}).

7. Apparatus according to Claim 6,
**characterized**
**in that** the at least one sensor device (11) for capturing the course of the road is arranged in a front region, preferably in a bumper region (13) of the vehicle (1), and the at least one sensor device (12) for capturing the clearance height (H_{D}) is arranged in a mirror region (15) of the vehicle (1) .

8. Apparatus according to one of Claims 4 to 7,
**characterized**
**in that** the environmental recognition system (10) is designed to capture the course of the road and the clearance height (H_{D}) in both vehicle directions of the vehicle (1).

## Revendications

1. Procédé de reconnaissance de la possibilité de passage d'un véhicule (1), dans lequel, au moyen d'un système de reconnaissance de l'environnement (10), la zone de la route située vers l'avant dans la direction de déplacement du véhicule (1) et la hauteur de passage (H_{D}) d'un passage (5) situé vers l'avant dans la direction de déplacement sont détectées et transmises à un dispositif de traitement de données (50), dans lequel le dispositif de traitement de données (50) génère un message d'avertissement sur la base de la hauteur maximale du véhicule (Hₘₐₓ) si la hauteur de passage est insuffisante (H_{D}),
dans lequel le dispositif de traitement de données (50) établit une relation entre la hauteur de passage (H_{D}) dans la zone du passage (5) et des données concernant le tracé de la route dans une plage de distances (a) à l'avant et à l'arrière du plan (4) du passage (5) et détermine à partir de celle-ci une hauteur de passage effective (H_{eff}) dans un couloir de déplacement (20) dans la direction de déplacement du véhicule (1), qui est disponible pour le véhicule (1),
**caractérisé en ce que** le dispositif de traitement de données (50) un ensemble de données (52) spécifiques du véhicule qui comprend les dimensions géométriques du véhicule (1), comprenant un entraxe (A) entre les essieux (2, 3) du véhicule (1), la hauteur maximale du véhicule (Hₘₐₓ) et la position ou la zone dans laquelle se situe la hauteur maximale du véhicule (Hₘₐₓ) sur le véhicule (1), et **en ce que** le dispositif de traitement de données (50) détermine la hauteur de passage effective (H_{eff}) sur la base de l'entraxe (A) du véhicule (1) et de la position de la hauteur maximale du véhicule (Hₘₐₓ) par rapport au véhicule (1) et compare la hauteur de passage effective (H_{eff}) à la hauteur de passage détectée (H_{D}) du passage (5).

2. Procédé selon l'une des revendications 1 ou 2, **caractérisé en ce que** le système de reconnaissance de l'environnement (10) détecte les données concernant le tracé de la route à des intervalles de temps réguliers, de préférence en fonction de la vitesse.

3. Procédé selon l'une des revendications 1 ou 2, **caractérisé en ce que** lorsqu'un risque de collision est reconnu, une intervention est effectuée sur le véhicule en plus d'un avertissement acoustique et/ou optique.

4. Dispositif (100) destiné à mettre en oeuvre un procédé selon l'une quelconque des revendications 1 à 3, comprenant un système de reconnaissance de l'environnement (10) destiné à reconnaître un tracé de la route vers l'avant dans la direction de déplacement et une hauteur de passage (H_{D}) d'un passage (5), et un dispositif de traitement de données (50) conçu pour générer un message d'avertissement lorsqu'une hauteur de passage (H_{D}) insuffisante par rapport à la hauteur maximale du véhicule (Hₘₐₓ) est reconnue,
**caractérisé en ce que** le dispositif de traitement de données (50) comprend un algorithme (51) qui détermine une hauteur de passage effectivement disponible (H_{eff}) par rapport au tracé de la route dans une plage de distances (a) avant et après le passage (5).

5. Dispositif selon la revendication 4,
**caractérisé en ce que** le système de reconnaissance de l'environnement (10) comprend au moins un dispositif capteur (11, 12) qui fonctionne sur la base d'ultrasons ou de caméras.

6. Dispositif selon la revendication 5,
**caractérisé en ce que** le système de détection d'environnement (10) comporte au moins un dispositif capteur séparé (11, 12) destiné à détecter le tracé de la route et à détecter une hauteur de passage (H_{D}).

7. Dispositif selon la revendication 6,
**caractérisé en ce que** ledit au moins un dispositif capteur (11) destiné à détecter le tracé de la route est disposé dans une zone située vers l'avant, de préférence dans une zone de pare-chocs (13) du véhicule (1), et **en ce que** ledit au moins un dispositif capteur (12) destiné à détecter la hauteur de passage (H_{D}) est disposé dans une zone de rétroviseur (15) du véhicule (1) .

8. Dispositif selon l'une des revendications 4 à 7,
**caractérisé en ce que** le système de reconnaissance de l'environnement (10) est conçu pour détecter le tracé de la route et la hauteur de passage (H_{D}) dans les deux directions de déplacement du véhicule (1).
